# EUROPEAN PATENT APPLICATION

(11) **EP 4 799 815 A1**
(43) Date of publication of application: **02.09.2026**
(21) Application number: 25160316.3
(22) Date of filing: 26.02.2025
(51) Int. Cl.: B33Y 70/00, C22C 1/04, C22C 1/047, C22C 5/02, A44C 27/00, G04B 99/00

(54) **PROCESS FOR PREPARING A GOLD-TITANIUM BASED ARTICLE**

(71) Applicant: RICHEMONT INTERNATIONAL SA, 1752 Villars-sur-Glâne (CH)
(72) Inventor: ROUXEL, Baptiste, 4052 Basel (CH); BUTTARD, Maxence, 2000 Neuchâtel (CH); COLAS, Damien, 2854 Bassecourt (CH)
(74) Representative: Ipsilon

(57) **Abstract**

The invention relates to a process for preparing a gold-titanium based article comprising the following steps:
(i) providing an atomized powder having a composition comprising gold and titanium, wherein the atomized powder consists of particles having a size of between 0.5 µm and 200 µm;
(ii) manufacturing a gold-titanium based article from the atomized powder;
(iii) optionally, carrying out a post-treatment on the gold-titanium based article.

## Description

### FIELD OF THE INVENTION

The invention relates to a process for preparing a gold-titanium based article from a powder of an atomized powder of a gold-titanium based alloy. The gold-titanium based article can be used in horology or jewelry.

### BACKGROUND OF THE INVENTION

Due to their properties, such as hardness, tensile strength or Young modulus, gold-titanium (Au-Ti) based alloys are used in fields such as dentistry, horology or jewelry.

Many metal manufacturing technologies used in our society rely on a combination of mechanical and thermal processes to shape the material into the desired geometry and concurrently engineer its microstructure and properties.

For long, the golden standard for manufacturing gold-titanium based products such as timepiece or jewel components relied on the plastic deformation and/or machining of these alloys.

However, plastic deformation is limited to specific gold-titanium alloy compositions and is not compatible with alloys that are difficult to shape by mechanical deformation, for instance hard alloys.

Additive manufacturing (AM) is a recent very promising approach for generating components with high levels of precision.

AM, also known as three-dimensional (3D) printing, enables making and joining materials together layer by layer, using a laser, to produce near-net-shape parts with previously impossible geometric complexity. It enables shapes and structures to be built up in a single production step - with reduced material waste and energy consumption, reduced reworking or tool wear (near-net-shape manufacturing), shortened fabrication time and reduced component cost. With the appropriate programming of the processing system, articles having highly complex shape and structure can be produced.

The Applicant has surprisingly discovered that gold-titanium based articles such as timepieces or jewelry compounds can be manufactured from an atomized gold-titanium based alloy powder, even hard and/or low deformation alloys.

The manufactured articles obtained with the process of the invention exhibit improved mechanical properties, a better resistance to corrosion when compared to their wrought or cast counterparts.

The applicant has surprisingly discovered that the present invention also allows tuning the mechanical properties, for example hardness, of the final Au-Ti based article as the crystallographic structure (microstructure) and phase proportion within the alloy may be modulated depending on the manufacturing parameters. Manufacturing by selective melting (for instance laser or electron beam) affords local control of the crystallographic structure of the alloy. On the other hand, manufacturing by metal injection affords a homogeneous microstructure and low surface roughness.

### SUMMARY OF THE INVENTION

The invention relates to a process for preparing a gold-titanium based article from an atomized gold-titanium based pre-alloy powder.

The process of the invention may be applied to a wide variety of Au-Ti based alloys, in particular hard and/or low deformation alloys that cannot be shaped by plastic deformation. Furthermore, improved mechanical properties are observed.

More specifically, process for preparing a gold-titanium based article comprising the following steps:
(i) providing an atomized powder of a pre-alloy of composition C1 consisting of, by weight:
   - 75% to 77% gold;
   - 15% to 25% titanium;
   - 0% to 10% one or more additional elements selected from the group consisting of: aluminum, palladium, chromium, vanadium, iron, copper, platinum, manganese;
   - 0 to 0.1% of a grain refiner selected from the group consisting of iridium, ruthenium, bore, cobalt, barium, yttrium, zirconium, and mixtures thereof;
      the balance of weight percent comprising inevitable incidental elements and impurities;
      wherein the atomized powder consists of particles having a size of between 0.5 µm and 200 µm;
(ii) manufacturing a gold-titanium based article from the atomized powder;
   wherein the manufacturing of step (ii) is a powder metallurgy based technique, preferably a technique selected from the group consisting of: metal injection molding, metal injection molding-like, selective melting and powder fusion;
(iii) optionally, carrying out a post-treatment on the a gold-titanium based article.

The gold-titanium based article resulting from step (ii) or (iii) has the same C1 composition than the pre-alloy of step (i).

### Step (i)

The atomized powder typically consists of particles of a gold-titanium based pre-alloy of composition C1. Accordingly, the optional addition element(s) (one or more of: Al, Pd, Cr, V, Fe, Cu, Pt, Mn) and/or the optional grain refiner (one or more of Ir, Ru, B, Co, Ba, Y, Zr) are pre-alloyed with gold and titanium before step (i).

Preferably, the gold-titanium based pre-alloy comprises 75.3% to 77% gold, by weight of composition C1.

The additional elements (aluminum, palladium, chromium, vanadium, iron, copper, platinum, manganese and mixtures thereof) allow lowering the temperature of transformation of the pre-alloy. Preferred elements are palladium, chromium, vanadium, aluminum, and mixtures thereof.

The amount of the additional element(s) is between 0 and 10% by weight of the composition C1, more preferably between 1 and 6% by weight, even more preferably between 2 and 4% by weight.

The grain refiner is selected from the group consisting of iridium, ruthenium, bore, cobalt, barium, yttrium, zirconium and mixtures thereof. The grain refiner allows the formation of small grains, improves the hardness, and prevents the formation of cracks or microcracks. It also affords an alloy having a small shape memory effect. A preferred grain refiner is iridium.

The amount of grain refiner is between 0 and 0.1% by weight of the composition C1, more preferably between 0 and 0.05% by weight, even more preferably between 0.002 and 0.01% by weight. It can range from 0.002 to 0.1 % by weight.

In composition C1, the sum of all percentages ('75-77% Au' + '15-25% Ti' + '0-10% additional element(s)' + '0-0.1% grain refiner(s)') is 100.

According to a preferred embodiment, the composition C1 consists of two elements (gold and titanium) or three elements (gold, titanium and one grain refiner, for instance gold, titanium and iridium).

According to a preferred embodiment, the composition C1 consists of gold, titanium, iridium and one or more elements selected from the group consisting of: aluminum, palladium, chromium, vanadium, iron, copper, platinum, manganese, and mixtures thereof.

For the same volume, this alloy is lighter than conventional gold alloys, for instance Au₇₅₀Ag₁₂₅Cu₁₂₅. It is lighter but still exhibits a hardness of between 180 and 800 Hv, preferably between 250 to 500 Hv.

The person of skills in the art is able to prepare the atomized powder of step (i) by any known method. It is preferably prepared by atomization of a gold-titanium based pre-alloy of composition C1.

The atomized powder of step (i) consists of particles having a size of between 0.5 µm and 200 µm, preferably between 5 µm and 100 µm, more preferably between 10 µm and 80 µm and even more preferably between 30 µm and 60 µm. The size of the particles refers to d50 and is measured by conventional techniques, for instance by laser diffraction (e.g. a Malvern Mastersizer device). Regardless of the shape of a particle, the particle size corresponds to the diameter of the sphere scattering in the same way as the particle. The d50 is the mean particle size, 50% of the particles are smaller than d50, and 50% are bigger.

Within this range (0.5 µm to 200 µm), the manufacturing step (ii) affords alloys having homogenous properties and, improved densification. In fact, smaller particles (<200 µm) generally enhance sintering due to their higher surface energy and greater driving force for material transfer, leading to improved densification and reduced porosity. However, excessively fine particles (<0.5 µm) can also pose challenges, such as agglomeration and difficulty in handling.

Preferably, the particles have a spherical shape.

The C1 composition may comprise impurities. In general, impurities may result from the metals used to form the C1 composition. Advantageously, these possible impurities amount to a total of less than 1000 ppm, more preferably, less than 500 ppm, more preferably less than 250 ppm, by weight of the composition C1 ('75-77% Au' + '15-25% Ti' + '0-10% additional element(s)' + '0-0.1% grain refiner(s)').

In particular, impurities can include any one or more of carbon, oxygen and nitrogen.

The total amount of impurities other than carbon, nitrogen and oxygen is preferably less than 500 ppm, more preferably less than 250 ppm, even more preferably less than 200 ppm, by weight of the composition C1. These other impurities may include but not limited to hydrogen, sulfur; silicon; phosphorous; selenium; halogens; metals other than those of the composition C1; metalloids other than the grain refiner.

According to a preferred embodiment, non-metallic and non-metalloid impurities represent less than less than 1000 ppm, more preferably, less than 500 ppm, more preferably less than 300 ppm even more preferably less than 250 ppm) while metallic impurities (metals other than those of the composition C1; metalloids other than the grain refiner) preferably represent less than 500 ppm, more preferably less than 100 ppm, even more preferably less than 50 ppm, by weight of the composition C1.

### Step (ii)

The manufacturing of step (ii) is a powder metallurgy based technique, for example a technique selected from the group consisting of: metal injection molding, metal injection molding-like, selective melting and powder fusion.

The metal injection molding process, MIM, includes a debinding and a sintering step while the selective melting and the powder fusion process preferably include localized melting by laser or electron beam.

MIM is a manufacturing technology that uses a mould to shape the material. The advantages of the mould are many: particularly good reproducibility, good surface finish and the ability to achieve high production rates.

For the production of parts in small and medium series, MIM-like processes have been developed where printers replace injection moulding machines, providing more flexibility and freedom, thus limiting tooling costs (injection moulds). Binder Jetting or FDM Fused deposition modeling are some example of MIM-Like processes. MIM-like processes includes a debinding and a sintering step.

The manufacturing of step (ii) is preferably any one selected from the group consisting of: MIM-like (metal injection molding-like), spark plasma sintering (SPS), material extrusion, material jetting, vat photopolymerization, powder bed fusion (for instance LPBF i.e. laser powder bed fusion), selective laser melting (SLM), direct energy deposition and hot pressing.

It is preferably a laser or electron beam assisted additive manufacturing step.

It is preferably a selective melting technique, more preferably a selective laser melting (SLM) technique.

The manufacturing of step (ii) can be followed by a step of removing waste material, especially the SPS method, prior or after optional step (iii). In this case, the article resulting from step (ii) does not have its final shape. The SPS method may therefore include a subtractive step.

In step (ii), the atomized Au-Ti powder is preferably processed by additive manufacturing (AM) to generate a gold-titanium based article.

Preferably, the manufacturing of step (ii) is an additive manufacturing comprising the steps of:
a) forming a layer of the atomized powder;
b) forming a layer of an alloy of composition C1 from the layer of atomized powder by a technique selected from the group consisting of: metal injection, selective melting and powder fusion;
c) repeating steps a) and b) until a gold-titanium based article is obtained, wherein the gold-titanium based article is made of an alloy of composition C1.

The AM generally implies remelting the preceding layer. It is particularly appropriate to the following techniques: powder bed fusion (for instance LPBF i.e. laser powder bed fusion) and selective laser melting (SLM).

Preferably, steps a), b) and c) of the additive manufacturing (AM) allow forming an article having its final shape, which means that no subtractive step is needed. Only smooth finishing steps may be carried out, for instance polishing.

In step (ii), a layer of alloy is formed by applying heat on a layer of atomized powder, preferably by applying a laser beam i.e. exposing the layer of atomized powder to a laser beam. The heat source can also be based on an electron beam. It can also result from a sintering step.

According to a preferred embodiment, the manufacturing of step (ii) is a laser assisted additive manufacturing process, preferably a laser power-bed fusion process (LPBF) that includes a laser beam as heat source.

Electron beams and laser (preferably LPBF) parameters (for instance the laser beam) may be adjusted in order to modify the microstructure of the article, or part(s) of the article.

In particular, varying any one of power, hatching distance, scanning speed of the laser beam or electron beam, or thickness of the layer can afford different microstructures within the alloy, which will accordingly modify the final mechanical properties, for example the hardness or the resistance to corrosion of the final gold-titanium article.

Step (ii) can involve a laser beam (preferably LPBF) having a power comprised between 10 W and 1000 W, preferably between 100 W and 800 W, more preferably between 300W and 700W.

The laser (preferably LPBF) or the electron beam has a scanning speed of preferably between 10 and 5000 mm/s, preferably between 100 and 2000 mm/s, more preferably between 200 and 1000 mm/s.

The laser beam or electron beam of step (ii) (preferably LPBF) allows forming deep melt pools at the surface of the alloy, which do not have the defects of porosity commonly observed in the prior art. This results from the specific composition C1. This behavior may be due to the very low thermic conductivity of the pre-alloy of composition C1. The low thermal conductivity ensures good meltability while preventing heat transmission, which results in a homogeneous treatment during the melting of the pre-alloy. This is also enhanced by the size of the particles.

The laser beam or electron beam of step (ii) (preferably LPBF) is carried out with a hatch distance of preferably between 5 µm and 300 µm, more preferably between 10 µm and 150 µm, even more preferably 20 µm and 50 µm. The hatch distance, also called scan spacing, corresponds to the spacing between the centers of two adjacent beams. The hatch distance affects the laser line (or the electron beam line) overlapping in the scanning direction and subsequently causes different surface structures to develop.

The spot diameter of the laser beam (preferably LPBF) is preferably of between 10 µm and 150 µm, more preferably between 25 µm and 100 µm.

The manufacturing of step (ii) is preferably a laser assisted additive manufacturing in which the normalized enthalpy (preferably in a LPBF additive manufacturing) is preferably of between 1 and 800, more preferably between 1 and 150, even more preferably between 1 and 50.

The atomized Au-Ti powder has preferably a particle size of between 10 and 60 µm, preferably when the manufacturing of step (ii) is LPBF.

The atomized powder of step (ii) (preferably in an additive manufacturing) is a layer having a thickness of preferably between 10 and 150 µm, more preferably between 25 µm and 60 µm. When the heat source of step (ii) is not a laser beam or an electron beam, the atomized powder is a layer thicker than 150 µm.

The gold-titanium based article preferably consists of a gold-titanium based alloy having AuTi₃ (molar ratio) precipitates.

These AuTi₃ precipitates improve mechanical properties such as hardness.

The pre-alloy and the alloy of composition C1 exhibit a thermal conductivity of preferably between 1 and 100 W.m⁻¹.K⁻¹, more preferably between 9 and 30 W.m⁻¹.K⁻¹.

The low thermal conductivity of the alloy of composition C1 allows the formation of narrow and deep melt-pools during step (ii), which enhances the bonding between successive layers and improves the homogeneity of the resulting article. Improving the stability of the melt-pool reduces the formation of subsequent cracks and pores. Narrow and deep melt-pools also help (in addition to the appropriate hatch distance) preventing excessive melting of previous tracks (parts that have already been heated). This phenomenon occurs especially when step (ii) is a laser or an electron beam assisted additive manufacturing step.

Typically, in the invention, the melt-pool has a surface area that matches the laser beam or electron beam (for instance a spot diameter of the laser beam of preferably 10 to 150 µm, more preferably 25 to 50 µm). The melt-pool has a depth that matches the thickness of the layer of the atomized powder (preferably 10 to 150 µm, more preferably 25 to 50 µm).

When step (ii) is a laser or electron beam assisted additive manufacturing step, the Applicant has noticed that modifying the melt pool depth and shape has also an influence on the microstructure of the gold-titanium based alloy resulting from step (ii).

In other terms, when step (ii) is a laser or electron beam assisted additive manufacturing step, the invention also allows modifying the microstructure of the alloy, affording a nano-organized structure.

Step (ii) can be different from one layer to another and/or from one track to another one. Changing the parameters of step (ii), for instance the laser parameters (preferably in a LPBF additive manufacturing) or the electron beam parameters, affords different microstructures and therefore different properties to the alloy. Such parameters include power, scanning speed and hatching distance.

Therefore, when step (ii) is a laser or electron beam assisted additive manufacturing step, the alloy resulting from step (ii) can exhibit at least 2 different microstructures. The gold-titanium based article can therefore exhibit parts having hardness properties greater than other parts of the article.

### Step (iii)

The process of the invention may eventually comprise a post-treatment of the Au-Ti article resulting from step (ii).

For instance, the post-treatment may be a heat treatment, for instance a hot isostatic pressing (HIP) or a laser treatment.

The heat treatment is preferably carried out at a temperature of between 400 and 1400 °C, more preferably between 1000 and 1400 °C.

The heat treatment (such as HIP) preferably lasts from 1 minute to 50 hours, more preferably from 2 minutes to 20 hours, even more preferably from 20 minutes to 2 hours.

Preferably, the heat treatment (such as HIP) is carried out at a temperature of between 400 and 1400 °C for 1 minute to 50 hours, more preferably for 2 minutes to 20 hours.

A second heat treatment may be carried out after the homogenizing step. The second heat treatment is preferably carried out at a temperature of between 400 and 1000 °C (more preferably from 600 to 900 °C) and for 60 minutes to 10 hours.

This post-treatment allows remelting the surface of the article.

Other conventional post-treatments may be carried out, for instance polishing the article.

Any surface treatment (for instance polishing) is optional since step (ii) affords an article having a low surface roughness. This is mostly due to the combination of the form of the pre-alloy (specific particles), the composition of the pre-alloy and the nature of the manufacturing technique of step (ii).

Limiting or avoiding any surface treatment is quite convenient since it would involve a lot of energy, and any precision tool would wear off quite rapidly due to the hardness of the alloy.

Thanks to the specific particles of pre-alloy (size + composition), high quality articles are produced even though the process requires less machining and less surface treatment. The process can therefore be free of step (iii) and still afford high quality articles.

Preferably, the process is free of any surface treatment when step (ii) is a metal injection technique, or a MIM-like technique.

### Gold-titanium based pre-alloy powder

The present invention also relates to an atomized gold-titanium based pre-alloy powder consisting of, by weight:
- 75% to 77% gold;
- 15% to 25% titanium;
- 0% to 10% element chosen among aluminum, palladium, chromium, vanadium, iron, copper, platinum, manganese, and mixtures thereof;
- 0% to 0.1% of a grain refiner selected from the group consisting of iridium, ruthenium, bore, cobalt, barium, yttrium, zirconium, and mixtures thereof;
the balance of weight percent comprising inevitable incidental elements and impurities, wherein the atomized pre-alloy powder consists of particles having a size of between 0.5 µm to 200 µm.

### Gold-titanium based article

The invention also concerns a timepiece component comprising or consisting of a gold-titanium based article prepared by the process described above.

The invention also relates to a jewel component comprising or consisting of a gold-titanium based article prepared by the process described above.

The invention also concerns a gold-titanium based article obtained by the process described above, wherein the article has a hardness of between 180 and 800 Hv, preferably between 250 to 500 Hv and, preferably a nano-organized structure.

The invention and its advantages will become more apparent to one skilled in the art from the following figures and examples.

### BRIEF DESCRIPTION OF THE DRAWINGS

Figure 1 shows the microstructure of 'Au₇₅₀Ti_{249.5} - 500 ppm Ir' alloy resulting from step (ii) of the claimed process (LP-1 laser parameters of Table 2).
Figure 2 shows the microstructure of 'Au₇₅₀Ti_{249.5} - 500 ppm Ir' alloy resulting from step (ii) of the claimed process (LP-9 laser parameters of Table 2).
Figure 3 shows the microstructure of 'Au₇₅₀Ti_{249.5} - 500 ppm Ir' alloy resulting from step (ii) of the claimed process (LP-11 laser parameters of Table 2).
Figure 4 shows a deep and narrow melt-pool after step (ii).
Figure 5 shows a shallow and broad melt-pool after step (ii).

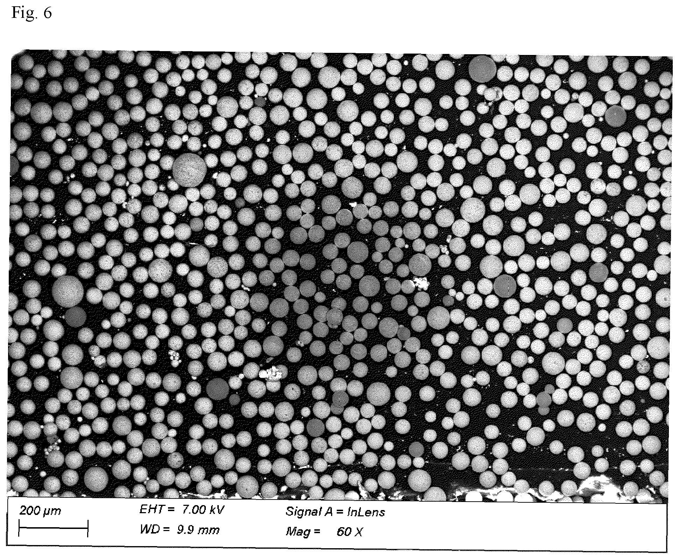

Figure 6 is a sample of the atomized powder having a composition C1 according to step (i).

### EXAMPLES

Gold-titanium articles have been prepared according to the invention, following different experimental conditions, as outlined in Tables 1 and 2.

Eight different alloys were prepared:

**Table 1: Different Au-Ti alloys compositions (by weight).**

| Example | C1 composition |
|---|---|
| 1 | AU₇₅₀Ti₂₅₀ |
| 2 | Au₇₅₀Ti_{249.5} + 500 ppm Ir |
| 3 | Au₇₇₀Ti_{229.5} + 500 ppm Ir |
| 4 | Au₇₅₀Ti_{219.5}Al₃₀ + 500 ppm Ir |
| 5 | Au₇₅₀Ti_{199.5}Al₃₀V₂₀ + 500 ppm Ir |
| 6 | Au₇₅₀Ti_{219.5}V₃₀ + 500 ppm Ir |
| 7 | Au₇₅₀Ti_{219.5}Cr₃₀ + 500 ppm Ir |
| 8 | Au₇₅₀Ti_{219.5}Pd₃₀ + 500 ppm Ir |

**Table 2: Different sets of laser parameters tested on 'Au₇₅₀Ti_{249.5} - 500 ppm Ir' pre-alloy particles.**

| **N°** | **Speed (mm/s)** | **Power (W)** | **Spot radius µm** |
|---|---|---|---|
| LP-1 (figure 1) | 200 | 500 | 25 |
| LP-2 | 400 | 500 | 25 |
| LP-3 | 600 | 500 | 25 |
| LP-4 | 800 | 500 | 25 |
| LP-5 | 1000 | 500 | 25 |
| LP-6 | 100 | 500 | 25 |
| LP-7 | 80 | 500 | 25 |
| LP-8 | 60 | 500 | 25 |
| LP-9 (figure 2) | 40 | 500 | 25 |
| LP-10 | 20 | 500 | 25 |
| LP-11 (figure 3) | 10 | 500 | 25 |

Each of the 8 alloys of Table 1 was then subjected to laser fusion using the 11 different sets of parameters of Table 2.

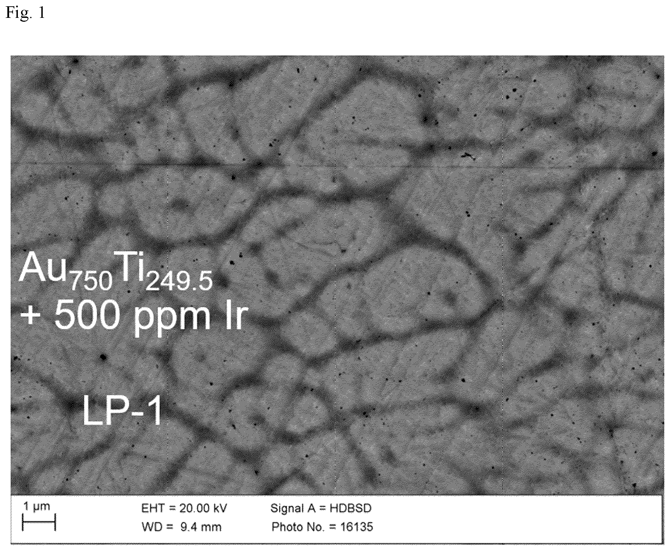

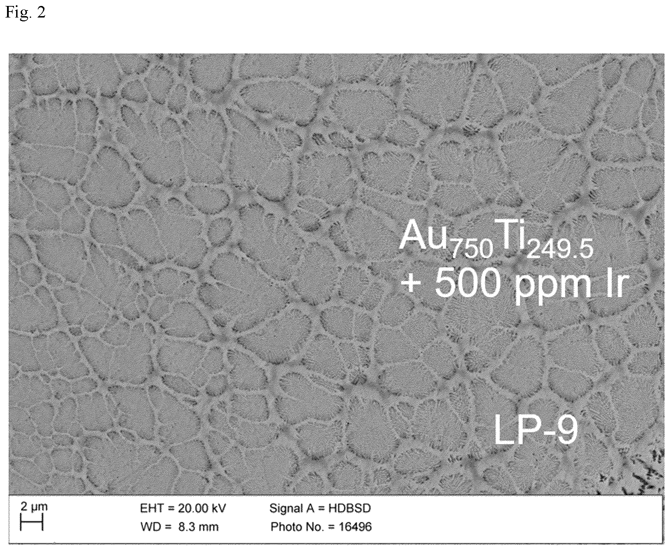

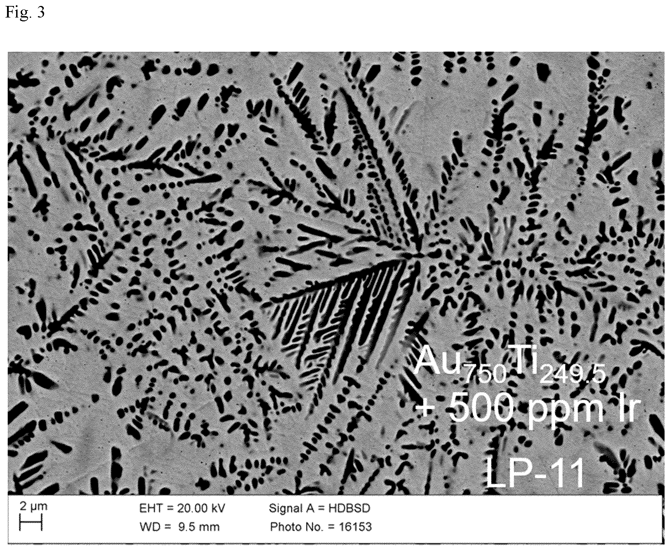

Within the same material composition, we were able to observe very different crystallographic structures depending on the set of laser parameters used (figures 1-3).

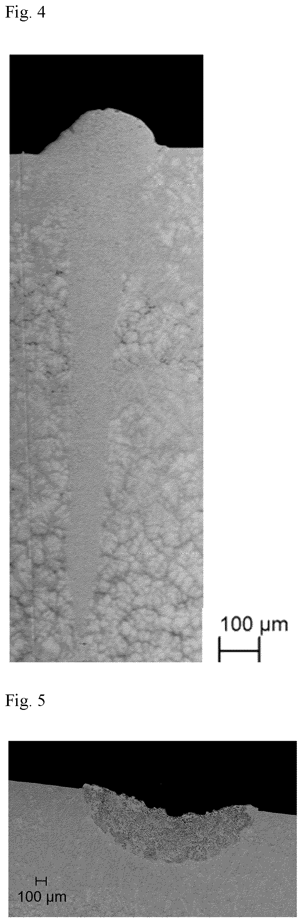

In addition, figures 4 and 5 show a narrow and deep melt-pool and a shallow and broad melt-pool respectively, which result from different laser treatments. These figures illustrate melt-pools resulting from a laser treatment. However, unlike the invention (particles), the laser treatment has been carried out on a bar of Au₇₅₀Ti_{249.5} - 500 ppm Ir.

Table 3 shows alloys exhibiting a hardness in the 300-400Hv range. These alloys have been prepared according to the parameters N° LP-11 of Table 2.

**Table 3: Hardness of different Au-Ti alloys obtained by selective laser melting (set of parameters N°11)**

| Example | C1 composition | Hardness (Hv) |
|---|---|---|
| 1 | Au₇₅₀Ti₂₅₀ | 304 |
| 2 | Au₇₅₀Ti_{249.5} + 500 ppm Ir | 393 |
| 3 | Au₇₇₀Ti_{229.5} + 500 ppm Ir | 384 |
| 6 | Au₇₅₀Ti_{219.5}V₃₀ + 500 ppm Ir | 357 |
| 7 | Au₇₅₀Ti_{219.5}Cr₃₀ + 500 ppm Ir | 371 |

## Claims

1. A process for preparing a gold-titanium based article comprising the following steps:
(i) providing an atomized powder of a pre-alloy of composition C1 consisting of, by weight:
- 75% to 77% gold;
- 15% to 25% titanium;
- 0% to 10% one or more additional elements selected from the group consisting of: aluminum, palladium, chromium, vanadium, iron, copper, platinum, manganese;
- 0% to 0.1% of a grain refiner selected from the group consisting of iridium, ruthenium, bore, cobalt, barium, yttrium, zirconium, and mixtures thereof;
the balance of weight percent comprising inevitable incidental elements and impurities;
wherein the atomized powder consists of particles having a size of between 0.5 µm and 200 µm;
(ii) manufacturing a gold-titanium based article from the atomized powder;
wherein the manufacturing of step (ii) is a powder metallurgy based technique, preferably a technique selected from the group consisting of: metal injection molding, metal injection molding-like, selective melting and powder fusion;
(iii) optionally, carrying out a post-treatment on the gold-titanium based article.

2. The process according to claim 1, wherein the atomized powder of step (i) consists of particles having a size of between 5 and 100 µm, more preferably between 30 and 60 µm.

3. The process according to any one of the preceding claims, wherein the manufacturing of step (ii) is any one selected from the group consisting of: MIM-like, spark plasma sintering, material extrusion, material jetting, vat photopolymerization, powder bed fusion, selective laser melting, direct energy deposition and hot pressing.

4. The process according to any one of the preceding claims, wherein the manufacturing of step (ii) is a laser or electron beam assisted additive manufacturing and wherein the alloy resulting from step (ii) exhibits at least 2 different microstructures.

5. The process according to any one of the preceding claims, wherein the manufacturing of step (ii) is an additive manufacturing comprising the steps of:
a) forming a layer of the atomized powder;
b) forming a layer of an alloy of composition C1 from the layer of atomized powder by a technique selected from the group consisting of: metal injection, selective melting and powder fusion;
c) repeating steps a) and b) until a gold-titanium based article is obtained, wherein the gold-titanium based article is made of an alloy of composition C1.

6. The process according to any one of the preceding claims, wherein the manufacturing of step (ii) is a laser assisted additive manufacturing involving a power comprised between 10 and 1000 W, preferably 300 and 700 W.

7. The process according to any one of the preceding claims, wherein the manufacturing of step (ii) is a laser assisted additive manufacturing having a laser beam with a scanning speed comprised between 10 and 5000 mm/s, preferably between 100 and 2000 mm/s and a hatch distance of between 5 µm and 300 µm, preferably between 10 µm and 150 µm.

8. The process according to any one of the preceding claims, wherein the pre-alloy and the alloy of composition C1 have a thermal conductivity of between 1 and 100 W.m⁻¹.K⁻¹, preferably between 9 and 30 W.m⁻¹.K⁻¹.

9. The process according to any one of the preceding claims, wherein the manufacturing of step (ii) is a laser assisted additive manufacturing in which the laser beam has a spot diameter of between 10 µm and 150 µm, preferably between 25 µm and 50 µm.

10. The process according to any one of the preceding claims, wherein the manufacturing of step (ii) is a laser assisted additive manufacturing in which the normalized enthalpy is comprised between 1 and 800, preferably between 1 and 150.

11. The process according to any one of the preceding claims, wherein the atomized powder of step (ii) is a layer having a thickness of between 10 µm and 150 µm, preferably between 25 µm and 60 µm.

12. The process according to any one of the preceding claims, wherein the process includes step (iii), which is a post-treatment consisting of a treatment carried out at a temperature of between 400 and 1400 °C, for 1 minute to 50 hours.

13. An atomized gold-titanium based pre-alloy powder consisting of, by weight:
- 75% to 77% gold;
- 15% to 25% titanium;
- 0% to 10% element chosen among aluminum, palladium, chromium, vanadium, iron, copper, platinum, manganese, and mixtures thereof;
- 0% to 0.1% of a grain refiner selected from the group consisting of iridium, ruthenium, bore, cobalt, barium, yttrium, zirconium, and mixtures thereof;
the balance of weight percent comprising inevitable incidental elements and impurities,
wherein the atomized pre-alloy powder has a particle size of between 0.5 and 200 µm.

14. Timepiece component or jewel component comprising, or consisting of, the gold-titanium based article prepared by the process according to any one of claims 1 to 12.
